# EUROPEAN PATENT SPECIFICATION

(11) **EP 4 027 662 B1**
(45) Date of publication and mention of the grant of the patent: **13.08.2025**
(21) Application number: 22150449.1
(22) Date of filing: 06.01.2022
(51) Int. Cl.: H04W 4/029, H04W 4/80

(54) **MONITORING SYSTEM FOR DETERMINING THE LOCATION OF BLUETOOTH BEACONS**
ÜBERWACHUNGSSYSTEM ZUR BESTIMMUNG DES STANDORTS VON BLUETOOTH-BAKEN
SYSTÈME DE SURVEILLANCE POUR DÉTERMINER L'EMPLACEMENT DE BALISES BLUETOOTH

(30) Priority: 06.01.2021 PT 2021116990
(43) Date of publication of application: 13.07.2022
(73) Proprietor: Wavecom - Soluções Rádio S.A., 3800-125 Aveiro (PT)
(72) Inventor: BRANQUINHO GOMES, ANDRÉ, 3800-125 AVEIRO (PT); FERNANDES PIMENTA, FRANCISCO, 4200-465 PORTO (PT); MATOS FERREIRA, IGOR FILIPE, 3800-125 AVEIRO (PT); QUELHAS DA CRUZ MARTINS FERREIRA, JOSÉ MANUEL, 3800-125 AVEIRO (PT); DE SOUSA PESSOA, LUÍS MANUEL, 4200-465 PORTO (PT); CARDANHA PAULINO, NUNO MIGUEL, 4200-465 PORTO (PT); TAVARES ALMEIDA, RAFAEL, 3800-125 AVEIRO (PT)
(74) Representative: Patentree

(56) References cited:
- WO-A1-2018/125785
- US-A1- 2016 165 387
- US-A1- 2016 174 022
- US-A1- 2018 107 576
- US-A1- 2019 380 311
- LI HUNG-YI ET AL: "A Low Complexity Low Power Indoor Positioning System Based on Wireless Received Signal Strength", 2018 IEEE 20TH INTERNATIONAL CONFERENCE ON E-HEALTH NETWORKING, APPLICATIONS AND SERVICES (HEALTHCOM), IEEE, 17 September 2018 (2018-09-17), pages 1 - 6, XP033443792, DOI: 10.1109/HEALTHCOM.2018.8531137

## Description

### TECHNICAL FIELD

The present disclosure relates to a monitoring system for determining the location of Bluetooth beacons using the relative positioning of one or more transceivers and the strength of received signal from said beacons at one or more said transceivers.

### BACKGROUND

The present disclosure relates to a monitoring system for determining the location of Bluetooth beacons using the relative positioning of one or more transceivers and the strength of received signal from said beacons at one or more said transceivers.

Document US2016174022A1 discloses a system for tracking and monitoring activities of individual in e.g. hospitals, has a gateway for receiving wearable advertising device identifier, and forwarding the advertising device identifier using a wireless fidelity module to a remote server.

Document US10231078B1 describes a real-time location system (RTLS) which uses Bluetooth Low Energy (BLE) transmitting tags, bridges, and beacons. The fixed beacons broadcast BLE advertisements containing motion-status information about recent history of perceived motion in a room as determined from a motion sensor in the beacon. The bridges forward the beacon's received advertisements to a location engine, which records timestamps of motion events seen by each beacon in each room. The system utilizes a series of location-engine steps, to estimate the room-location of the tags based on a specific combination of RSSI analysis, and a comparison of tag-motion history to the perceived and recorded motion-status in a room as an alternative to room-level location of a tag than can be estimated by simple proximity or multi-lateration using radio signal strengths.

These facts are disclosed in order to illustrate the technical problem addressed by the present disclosure.

### GENERAL DESCRIPTION

The disclosure includes a monitoring system for determining the location of Bluetooth beacons comprising a plurality of battery-powered Bluetooth beacons each arranged to wirelessly transmit periodically Bluetooth beacon messages, a plurality of battery-powered repeaters each arranged to receive and retransmit Bluetooth beacon messages as repeater messages, one or more line-powered gateways each arranged to wirelessly receive and retransmit said Bluetooth beacon or repeater messages as gateway messages, and a server arranged to receive said gateway messages to determine the location of said beacons.

It is disclosed a monitoring system for determining the location of Bluetooth beacons comprising:
a plurality of battery-powered Bluetooth beacons, each arranged to:
   wirelessly transmit periodically Bluetooth beacon messages comprising a beacon identification, beacon ID, of each said transmitting beacon;
a plurality of battery-powered repeaters, each arranged to:
   wirelessly receive the beacon messages transmitted by the Bluetooth beacons; measure the received signal strength of each received beacon message; and
   wirelessly transmit Bluetooth beacon messages comprising the beacon ID and the received signal strength of the received beacon messages and also comprising a repeater identification, repeater ID, of the transmitting repeater;
one or more line-powered gateways, each arranged to:
   wirelessly receive said beacon messages from beacons and repeaters;
   measure the received signal strength of each received beacon message; and
   transmit one or more gateway messages comprising the beacon ID, the received signal strength, and the repeater ID if applicable, of the received beacon messages, and a gateway identification, gateway ID, of the transmitting gateway;
a server arranged to:
   receive said gateway messages; and
   determine the location of each of said plurality of beacons from the received gateway messages using a database of predetermined locations for said one or more gateways and of predetermined locations for said plurality of repeaters.

In an embodiment, each beacon is arranged to transmit a beacon message and subsequently enter a low-power state for a predetermined sleep period of time until the next transmission of a beacon message.

Monitoring system according to any of the previous claims wherein each beacon is arranged to not receive confirmation that the beacon message was received by a gateway and is also arranged to not detect if there was another beacon transmitting at the same time the beacon message was being transmitted.

In an embodiment, each of the plurality of repeaters is arranged to:
alternate between a receiving state and a transmitting state;
during the receiving state, wirelessly receive the beacon messages transmitted by the Bluetooth beacons and measure the received signal strength of each received beacon message;
during the transmit state, transmit wirelessly Bluetooth beacon messages each comprising the beacon ID and the received signal strength of each of the received beacon messages and also comprising the repeater identification, repeater ID, of the transmitting repeater.

In an embodiment, each of the plurality of repeaters is arranged to:
during the transmit state, transmit a predetermined number of wirelessly Bluetooth beacon messages, for each of the received beacon messages, comprising the beacon ID and the received signal strength of the received beacon message and also comprising the repeater identification, repeater ID, of the transmitting repeater.

In an embodiment, each of the plurality of repeaters is arranged to transmit said predetermined number of wirelessly Bluetooth beacon messages, for each of the received beacon messages, interpolated between different Bluetooth beacons.

In an embodiment, each of the one or more gateways is arranged to:
transmit a summary gateway message comprising the beacon ID, the received signal strength, and the repeater ID if applicable, of all the received beacon messages which have been received for a predetermined periodical duration of time, and also comprising the gateway identification, gateway ID, of the transmitting gateway.

In an embodiment, the transmitted Bluetooth beacon messages by the Bluetooth beacons and by the repeaters have the same packet structure.

In an embodiment, the transmitted Bluetooth beacon messages by the Bluetooth beacons and by the repeaters have the same packet structure such that each of the one or more gateways is arranged to receive and transmit said beacon messages from beacons and repeaters, independently of whether the beacon messages originate from beacons or from repeaters.

In an embodiment, said Bluetooth beacon messages transmitted by the Bluetooth beacons are Bluetooth Low Energy, BLE, Advertisements packets.

In an embodiment, said Bluetooth beacon messages received and transmitted by the repeater beacons are Bluetooth Low Energy, BLE, Advertisements packets.

In an embodiment, said Bluetooth beacon messages received by the one or more gateways are Bluetooth Low Energy, BLE, Advertisements packets.

In an embodiment, said Bluetooth beacon messages are connectionless communication packets.

In an embodiment, the server is further arranged to determine the location of a Bluetooth beacon, for the beacon ID of the Bluetooth beacon which location is to be determined, by:
lookup in said database the predetermined location or locations of the gateway ID or gateways IDs comprised in any of received gateway messages with the beacon ID of the Bluetooth beacon which location is to be determined; and
if applicable, lookup in said database the predetermined location or locations of the repeater ID or repeater IDs comprised in any of the received beacon messages with the beacon ID of the Bluetooth beacon which location is to be determined;
report the looked-up locations.

In an embodiment, the server is further arranged to determine the location of a Bluetooth beacon by using one received Bluetooth beacon message with the beacon ID of the Bluetooth beacon which location is to be determined and having the highest received signal strength for a predetermined periodical duration of time.

In an embodiment, the server is further arranged to determine the location of a Bluetooth beacon by:
determine a route corresponding to each Bluetooth beacon message with the beacon ID of the Bluetooth beacon which location is to be determined, received for a predetermined duration of time, wherein said route comprises the repeater ID of the repeater, if applicable, and the gateway ID through which the Bluetooth beacon message reached said server;
calculate the average received signal strength of the Bluetooth beacon at said gateway or at said repeater if applicable;
report the route and the average received signal strength.

In an embodiment, the server is further arranged to determine the location of a Bluetooth beacon by:
determine a route corresponding to each Bluetooth beacon message with the beacon ID of the Bluetooth beacon which location is to be determined, received for a predetermined duration of time, wherein said route comprises the ordered repeater IDs of the repeater or repeaters, if applicable, and the gateway ID through which the Bluetooth beacon message reached said server;
calculate the average received signal strength for each route of the Bluetooth beacon;
report the route having the highest average received signal strength.

In an embodiment, the server is further arranged to determine the location of a Bluetooth beacon by:
determine a route corresponding to each Bluetooth beacon message with the beacon ID of the Bluetooth beacon which location is to be determined, received for a predetermined duration of time, wherein said route comprises the repeater ID of the repeater, if applicable, and the gateway ID through which the Bluetooth beacon message reached said server;
calculate the maximum received signal strength of the Bluetooth beacon at said gateway or at said repeater if applicable;
report the route and the maximum received signal strength.

In an embodiment, the repeaters are arranged to operate for a predetermined operation period of time and to enter a low-power state for a predetermined sleep period of time until the next operation period.

In an embodiment, all the beacons are arranged to use a lower transmission power than any of the repeaters.

In an alternative embodiment, all the beacons and all the repeaters are arranged to use the same transmission power.

In an embodiment, wherein the server is further arranged to determine the location of a beacon by calculating an intermediate location from two determined locations of said beacon or by trilateration of two or more determined locations of said beacon using the received signal strength for each determined location.

In an embodiment, the beacon messages further comprise a beacon-measured temperature and/or beacon battery status.

In an embodiment, the beacon messages transmitted by a repeater further comprise a repeater-measured temperature and/or repeater battery status.

In an embodiment, all the gateways and all the repeaters are arranged to use the same reception sensitivity.

In an embodiment, the received signal strength is the received signal strength indicator, RSSI.

In an embodiment, the gateways are line-powered by a main connection or a power-over-ethernet, PoE, connection.

It is also disclosed a method for implementing a monitoring system for determining the location of Bluetooth beacons, the method comprising the steps of:
wirelessly transmit periodically Bluetooth beacon messages, by a plurality of battery-powered Bluetooth beacons, said Bluetooth beacon messages comprising a beacon identification, beacon ID, of each said transmitting beacon;
wirelessly receive the beacon messages transmitted by the Bluetooth beacons, by a plurality of battery-powered repeaters;
measure the received signal strength of each received beacon message, by the plurality of battery-powered repeaters; and
wirelessly transmit, by the plurality of battery-powered repeaters, Bluetooth beacon messages comprising the beacon ID and the received signal strength of the received beacon messages and also comprising a repeater identification, repeater ID, of the transmitting repeater;
wirelessly receive, by one or more line-powered gateways, said beacon messages from beacons and repeaters;
measure the received signal strength of each received beacon message, by said one or more line-powered gateways; and
transmit one or more gateway messages, by said one or more line-powered gateways, said gateway messages comprising the beacon ID, the received signal strength, and the repeater ID if applicable, of the received beacon messages, and a gateway identification, gateway ID, of the transmitting gateway;
receive said gateway messages by a computer server; and
determine the location of each of said plurality of beacons from the received gateway messages using a database of predetermined locations for said one or more gateways and of predetermined locations for said plurality of repeaters.

It is also disclosed a non-transitory storage media comprising computer program instructions for implementing a monitoring system for determining the location of Bluetooth beacons, the computer program instructions including instructions which, when executed by a processor, cause the processor to carry out the method of any of the disclosed embodiments.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of a beacon monitoring system architecture according to the present disclosure.
**Figure 2****:** Schematic representation of an embodiment of a beacon monitoring system with repeater according to the present disclosure.
**Figure 3****:** Schematic representation of an embodiment of a repeater to increase system's coverage according to the present disclosure.
**Figure 4****:** Schematic representation of an embodiment of a repeater to increase beacons' location estimation accuracy according to the present disclosure.
**Figure 5****:** Schematic representation of an embodiment of a repeater to increase beacons' location estimation accuracy using reduced beacon transmission power according to the present disclosure.
**Figure 6****:** Schematic representation of an embodiment of simplified packets from beacon and repeater according to the present disclosure.
**Figure 7****:** Schematic representation of an embodiment of a communication flow between beacons, repeater and gateway according to the present disclosure.
**Figure 8****:** Schematic representation of an embodiment of a communication flow considering the repeater's switching between receiving and transmitting according to the present disclosure.
**Figure 9****:** Schematic representation of an embodiment of a communication flow with separated periods for receiving and transmitting according to the present disclosure.
**Figure 10****:** Schematic representation of an embodiment of a repeater packet with information from multiple beacons according to the present disclosure.
**Figure 11****:** Schematic representation of an embodiment of a location estimation with gateway and repeater according to the present disclosure.
**Figure 12****:** Schematic representation of an embodiment of an estimating position with information from gateway and repeater according to the present disclosure.
**Figure 13****:** Schematic representation of an embodiment of an estimating position with information from gateways and repeaters in a scenario with dense infrastructure according to the present disclosure.

### DETAILED DESCRIPTION

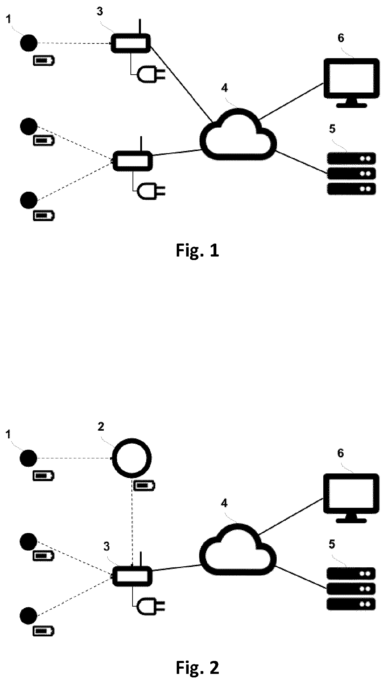

**Figure 1** shows a schematic representation of the general architecture of a beacon monitoring system. Starting from the left, beacons 1 periodically send messages to the air (wireless broadcast). These messages include the beacon's identity and may also include other information, such as: remaining battery, temperature, acceleration, etc. This communication is typically performed with a low-power and shorter-range communication standard, such as Bluetooth Low Energy. When these beacons are in the vicinity of a gateway **3,** their messages are received by the gateway. During the message reception, the gateway calculates the received signal strength indicator (RSSI) of the message. The gateways process these messages and send the relevant information to a central server **5,** through a Local Area Network (LAN) or the Internet **4,** using either a wired or wireless communication. This communication is normally performed with a more power-hungry and longer-range communication standard, such as Wi-Fi or Ethernet. Applications **6** may then use this data to give users information about the beacons.

Beacons spend most of their time "sleeping", they only "wake up" to send periodic messages to the air (broadcast). The period of these messages is normally predefined, and they do not know if other beacons are transmitting, or if the message is actually received. Messages are sent without prior establishment of connection. This "simplistic" behaviour enables them to operate several years with a small battery, enabling their application to asset/people tracking and mobile asset/people monitoring.

Since gateways need to continuously "hear" the messages from the beacons and send the relevant information over a more power-hungry communication standard, they are operated plugged to a power source, e.g. wall power socket or Power over Ethernet (PoE). This need for power connection usually limits the possible locations for the gateways and increases installation costs.

**Figure 2** shows a schematic representation of the architecture of the same beacon monitoring system when one of the gateways **3** is replaced by a battery-powered repeater **2.** Again, beacons **1** periodically broadcast messages. However, these messages may be received both by gateways and/or repeaters. When they are received by gateways, the relevant information is transmitted to the central server 5, serving different applications (as described in **Figure 1****).** When beacons' messages are received by a repeater, the repeater extracts the relevant information from the beacon, along with the signal strength of the received signal (RSSI), and "repeats" this information with the same protocol beacons use to send their messages. This way, gateways can receive messages from repeaters, using the same interface they use to receive messages from beacons.

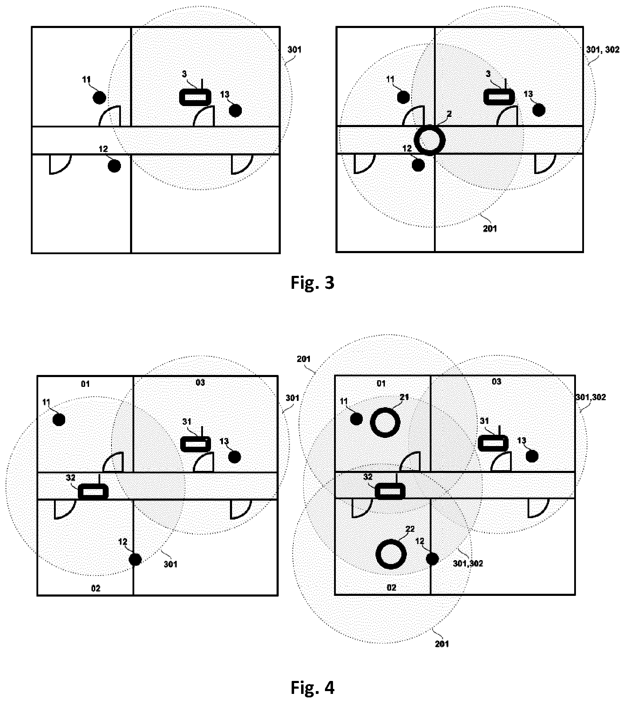

Some possible applications of the repeater are described in **Figure 3, Figure 4** and **Figure 5****.** In every example there is a floorplan representing four rooms and a corridor.

**Figure 3** depicts a scenario where the repeater can be used to increase the monitoring system's coverage. The figure shows three beacons being monitored **11, 12, 13.** All beacons are transmitting with the same transmission power. Initially, only a gateway **3** is installed. The approximate gateway coverage area is represented with a circle around it **301.** The coverage area represents the area where the gateway is able to receive beacon messages, based on the transmission power of the beacons and on the receive sensitivity of the gateway. With the initial coverage area, the system will only receive messages from beacon **13.**

To increase the total coverage area of the system, a repeater **2** is then added in a position where it is both able to receive messages from the remaining beacons **(11, 12)** and send the repeated information to the gateway, using the same transmission power as the beacons. Since the transmission power of the repeater is equal to the transmission power of the beacons, the coverage area of the gateway is the same for both beacons and repeaters **301, 302.** Considering that the gateway and the repeater have equal receive sensitivity, the coverage area of the repeater **201** for beacons is approximately the same size as the coverage area of the gateway **301.**

One of the interesting applications of beacon monitoring systems is the location estimation of assets and people (where the beacons are attached). By knowing the positions of the infrastructure elements (gateways and repeaters), location estimation is performed using the received signal strength indicator (RSSI) of the beacon's communications to the different gateways and repeaters. In general, the higher the RSSI of a communication, the closer the beacon is to the receiver. This applies best when there is direct line-of-sight (LOS) between beacon and receiver. Obstacles and reflections tend to deteriorate the correlation between RSSI and distance, making it harder to correctly estimate the distance between beacon and receiver. With the different RSSI values, the location of the beacon may be selected to be the same as the closest gateway/reader, or more complex algorithms can be applied (e.g. trilateration).

**Figure 4** depicts a scenario where the repeater can be used to increase the accuracy of the location estimation of a beacon. The target of the represented system is to assess the room location **01, 02, 03** of each beacon (e.g. beacons attached to assets for asset tracking). Initially, the system is already able to receive communications from all beacons **11, 12, 13** using two gateways **31, 32.** Beacon **13** is only "heard" by gateway **31.** Moreover, since the beacon is close to the gateway, the received signal strength will probably be high, and the system would (correctly) assume with a high probability that beacon **13** is inside room **03.**

Due to installation limitations (e.g. no power source available), gateway **32** is placed on the corridor, covering both rooms **01** and **02.** Beacons **11** and **12** are "heard" by gateway **32.** The system will know that there is a high probability that these beacons are inside rooms **01** or **02** but will not be able to assess in which of them they are. A possible solution is to add battery-powered repeaters **(21, 22),** one in each room. This way, repeater **21** will receive communications from beacon **11** with a high RSSI and will communicate this to gateway **32.** Using the combined information of the packets received directly from beacon **11,** and the beacon "repeated" packets received from **21,** the system will be able to correctly assess that beacon **11** is inside room **01.** The same principle applies to make the assessment that beacon **12** is inside room **02.**

Adding more gateways and repeaters with a high coverage zone will sometimes not solve the uncertainty of the beacons' location.

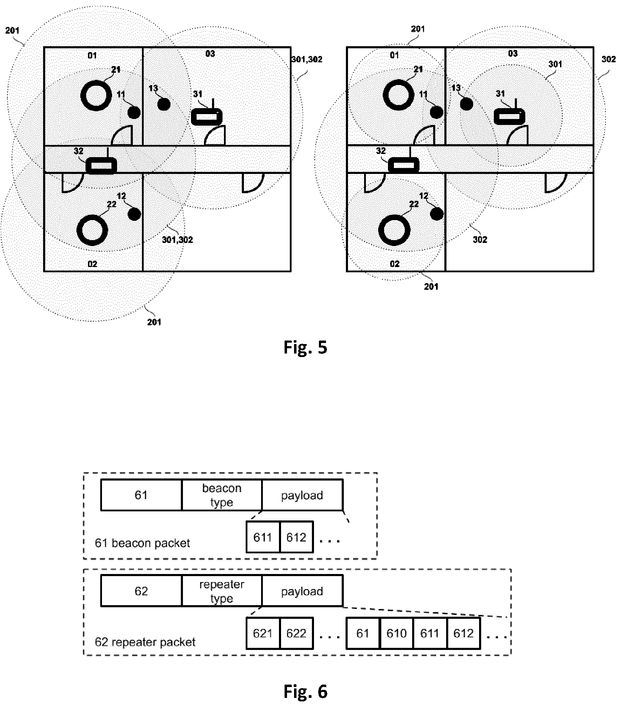

**Figure 5** shows a modification to the previous example. In this example, due to the high coverage zone of repeaters **201** and gateways **301,** beacons **11, 12, 13** will be "heard" by more than one repeater/gateway, making it hard to assess the correct room location. This is even more difficult, if obstacles and reflections are taken into account. One possible solution is to use the previously added repeaters together with a reduced transmission power on the beacons, while maintaining the high transmission power on the repeaters. This way, the system gateways will have two different sizes for the coverage zones: one larger area for the repeater coverage by the gateways **302,** and one smaller area for the beacon coverage by repeaters and gateways **201, 301.** With this solution, the system will easily assess the correct location of the different beacons. This application brings another advantage: reducing the transmission power on the beacons will also lead to an increase in their battery lifetime.

**Figure 6** shows an example of the most relevant contents of the packets sent from a beacon **(61)** to a repeater and the packets sent from a repeater **62** to a gateway. As previously mentioned, packets form beacons and repeaters are similar, so that the gateway is able to receive packets from both of them with the same interface. Both packets contain the transmitter's address / ID **61, 62,** the packet type, beacon or repeater, that identifies whether the packet is sent from a beacon or from a repeater, and a payload. The payload of the beacon includes its battery **611** and temperature **612.** The payload of the repeater includes its own battery **621** and temperature **622** and the information from the beacon it is repeating **61, 610, 611, 612.** Besides the battery and temperature of the beacon **611, 612,** the repeater also sends the beacon's ID **61** and the calculated RSSI of the received beacon packet **610.** This is important for the asset/people location applications explained before.

Repeaters only use the shorter-range low-power communication standard, both to receive the communications from the beacons and to send their information to the gateways. Nevertheless, this is not enough to enable battery-powered operation during long periods of time (at least 1 year). Even if a repeater is receiving messages from a single beacon and simply repeating these messages, its energy will quickly drain out. This happens because the repeater does not go to sleep between transmissions, like the beacon does. Although transmission may require more power than reception, the total energy spent during reception is typically much higher than the total energy spent in transmission. As an example, with a battery of 10 Ah capacity, and considering a low Bluetooth receive (RX) average current consumption of 5 mA, the repeater would last less than 3 months (without considering the transmissions). On the other hand, a beacon sending a packet every second is typically able to last several years (more than 3), using a battery of 1 Ah. Its average power consumption benefits from the sleeping periods between transmissions.

In situations where the characteristics of the system are not fast-changing, or where some degree of information delay is acceptable, it may be enough to perform time-sampling on the monitoring of the beacons. This applies to some temperature monitoring systems, asset/people location, etc. As an example, in an asset location system where assets spend most of their time stopped (e.g. 4 hour periods) and only make movements to change position during short periods (e.g. 10 minute movements), it is acceptable to only have information from time to time (e.g. from 5 to 5 minutes). In these scenarios, repeaters may operate only in some intervals (e.g. for 30 seconds), "sleeping" during the remaining time.

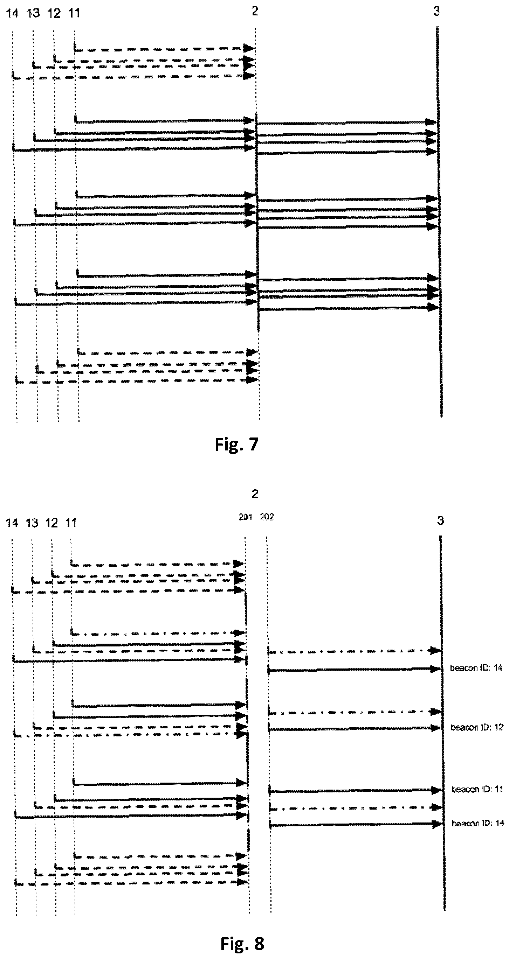

**Figure 7** shows the ideal flow of communication between beacons, repeater and gateway. This example considers that the beacons are only being "heard" by the repeater (they are not in the coverage zone of the gateway). Beacons 11, **12, 13, 14** periodically send their messages. When the repeater **2** is "sleeping", messages are not received by the repeater, and so the gateway **3** does not get any information from the beacons. When the repeater is operating, it receives the beacons' messages and repeats them. Repeater is in the coverage zone of the gateway, so these repeated messages are received by the gateway. This information is then sent to the central server, enabling the desired asset/people monitoring.

The communication flow is in fact more complex. Even though beacons are in the coverage zone of a repeater, there are several factors that may interfere with the communication between beacons and repeater. As already stated, beacons typically do not implement any kind of medium access control, i.e., they simply transmit their packets, even if other communications are being performed on the same frequency at the same time. This may lead to interference, and this problem tends to grow with the number of beacons present in the system, but also with other devices operating in close frequency bands. As an example, Bluetooth Low Energy beacons operate on the license-free 2.4 GHz band, which is very crowded (Bluetooth, Wi-Fi, ZigBee, ...), leading to potential interference problems.

Nevertheless, this is not the only factor that may interfere with the quality of the communication. The characteristics of the protocol may also influence the success of the communications. As an example, to reduce the probability of frequency interference, Bluetooth Low Energy implements frequency hopping in its protocol, using a total of 40 channels (frequencies). Regarding the beacons, they send a specific type of packet, part of a group of packets known as advertising packets. If these packets were sent over all channels, it would be very difficult to ensure transmitter and receiver were tuned to the same frequency at the same time. However, if these messages were sent over a single "noisy" channel, there would be too much interference. To mitigate these problems, advertising packets are sent over three designated channels. Receivers cycle over these three designated channels to try to "hear" these advertising packets. Once again, receivers could stay tuned in one particular channel, instead of cycling through the three channels, but if this channel has some constant interference problem (e.g. Wi-Fi systems), the efficiency of the system would drastically reduce. Even though beacons sent their advertising messages on the three channels each time they broadcast, there is some probability that the receiver is not tuned to the correct channel at the exact time (e.g. switching between channels).

All these problems have a higher impact when repeater's switching between receiving and transmitting is considered. **Figure 8** depicts a scenario similar to the one depicted in **Figure 7****,** but with detailed repeater's receiving **21** and transmitting **22** processes, together with some probability of interference or other problems that affect communications. Each time the repeater is able to receive a packet from a beacon **11, 12, 13, 14,** it switches to transmitting mode, working as a beacon itself. Since the physical medium for communication is the same for transmitting and receiving, when the repeater is transmitting, it will not receive any communication from the beacons. Moreover, the packets that are being transmitted by the reader will also contribute to increase the total interference probability of the system. In this example, during the period the repeater was operating (not "sleeping"), the gateway was not able to receive any information for beacon **13.** The gateway may only receive information from beacon **13** on the next time repeater returns to operating mode, reducing the sampling rate of the system.

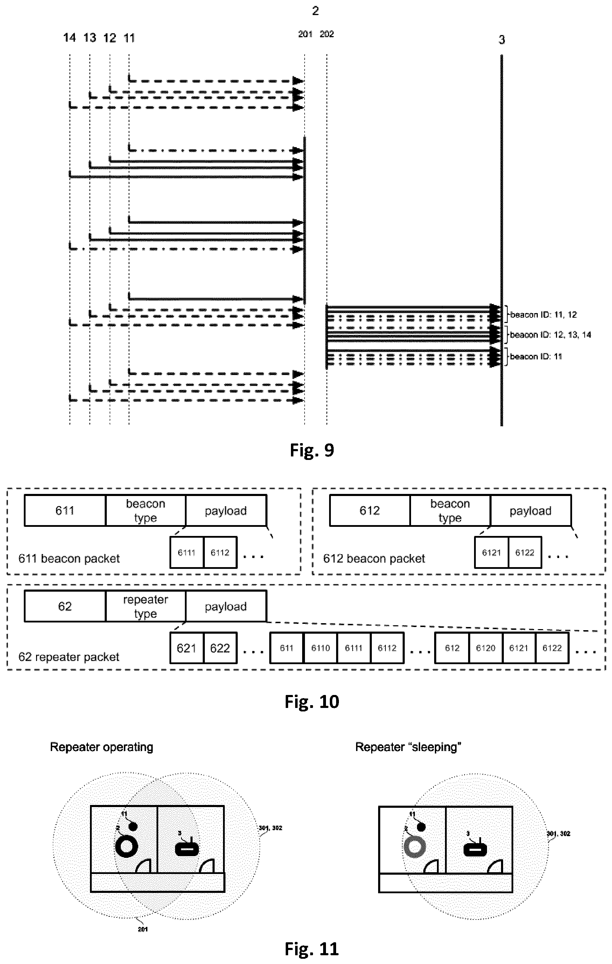

A possible solution is explained in **Figure 9****.** In this case, repeater **2** operates with separate periods for receiving **21** and transmitting **22.** This way, packets sent by beacons **11, 12, 13, 14** are not lost due to the repeater's switching between receiving and transmitting. This increases the probability of repeater "hearing" all the beacons in the surroundings. During the transmitting period, repeater broadcasts (as a beacon) the information from the different beacons that were "heard" during the receiving period. To reduce the "awaken" time and simultaneously increase the probability of successful information transmission, the repeater may broadcast multiple equal packets for each beacon with a shorter period than the period beacons are broadcasting (e.g. beacons may be broadcasting once per second, and repeater may broadcast with a period of 100ms). This may be done sequentially (e.g. three packets repeating beacon **11,** then three packets repeating beacon **12,** etc.) or interleaved, as shown in the figure (e.g. one packet repeating **11,** one packet repeating **12,** etc., and repeat the whole process three times). The proposed interleaved method is particularly interesting in a very crowded frequency band, such as the 2.4 GHz band. Communications from other devices may interfere with the packets sent by the repeater. In case these are burst communications, interference will occur during certain time windows. If all packets of the same beacon are sent consecutively, there is a higher probability a burst communication from other devices prevent gateways from receiving information from one or more of the beacons.

During the receiving period, the repeater may receive several packets from a beacon. These packets may have different RSSI, different temperature value, etc. During the transmitting period, repeater will transmit multiple equal packets for that beacon, so one single value should be reported. This is solved by applying a function to the received values, such as the maximum value, average, median, or other function that serves the application (this also solves the issue of possibly having more received packets than the number of packets that are going to be transmitted for a defined beacon).

To optimize even further the probability of success of the "awaken" time, packets sent from the repeater may contain information from multiple beacons. **Figure 10** shows the packets that are sent from the repeater, containing information from more than one beacon. The two top packets represent the packets sent from two beacons **611, 612.** The payload of the repeater's packet includes its own information: repeater's battery **621** and temperature **622,** followed by the information of the different beacons: ID **611,612,** RSSI **6110, 6120,** Battery **6111, 6121** and temperature **6112, 6122.** Although only two beacons are represented, this may be applied for multiple beacons. The limitation of the number will come from the maximum size of the packet, depending on the protocol being used.

One of the challenges of gateways working simultaneously with repeaters having operating and "sleeping" modes is depicted in **Figure 11****.** In this scenario, room location estimation is being performed, having one gateway 3 placed inside room **02** and one repeater **2** placed inside room **01.** The system knows the positions of both gateway and repeater and uses the RSSI to assess the beacons' position relatively to these infrastructure elements. Repeater is inside the coverage zone of the gateway **302,** so it can send the messages from the nearby beacons to this gateway. Beacon **11** is stopped inside room **01.** It is both inside the coverage zone of the reader **201** and inside the coverage zone of the repeater **301.** During the period where the repeater is operating, gateway will receive both messages directly from the beacon and messages from the repeater with the beacon's information. Since the beacon is closer to the repeater, the messages from the repeater will have in principle a higher RSSI for that beacon, leading to the system's conclusion that beacon **11 is** inside room **01.** However, during the "sleeping" period of the repeater, system will only get information from the direct messages of the beacon to the gateway. This will mislead the system into thinking that beacon **11** is inside room **02.** The system would only have the correct information during the operating periods of the repeater.

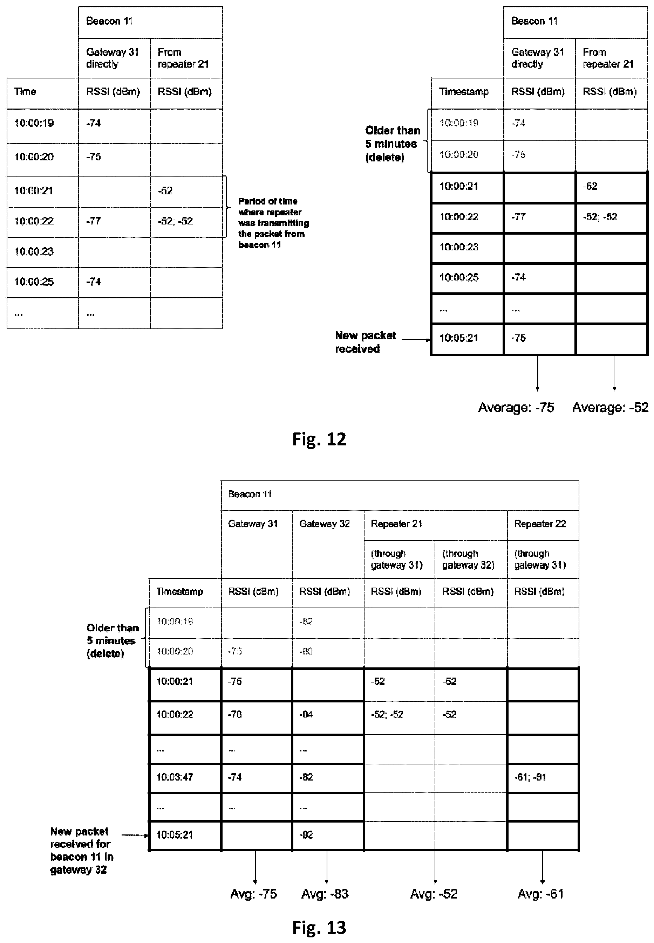

This is solved by applying the method described in **Figure 12****.** As the messages from beacon **11** are received by gateway and repeater, two buffers are created for that beacon (left side of the image): one containing the packets (timestamp and RSSI) of beacon **11** received directly from the gateway, and one containing the packets (timestamp and RSSI) of beacon **11** received via repeater packets. Blank slots in the gateway column may represent packets that were not received (e.g. interference, etc). Blank slots in the reader column represent mainly the sleeping or scanning periods, where repeater is not sending packets.

Each time a new packet from beacon **11** is received (from a gateway or a repeater), a new position estimation is performed (right side of the image). In this example, repeater is operating from 5 to 5 minutes during a certain amount of time, and "sleeping" between operation periods. When the new packet is received by the gateway, the system will consider information up to 5 minutes in the past (to have information from all relevant repeaters). Since the packet is received at 10:05:21, all the packets received between 10:00:21 and 10:05:21 are considered by system (from all gateways and all repeaters). The system applies a function (e.g. maximum, average, median, ...) to get a single RSSI value for each infrastructure element (repeaters and gateways). With these values and a position algorithm (closest gateway/repeater, trilateration, etc.), the system estimates the position of the beacon. In this case, using the closest gateway/repeater, beacon **11** would be assessed as being in the same room as the repeater (for room-level location). This approach has the best results for slow-changing scenarios, where it is expected that during most of 5 minutes intervals, the system does not drastically change.

**Figure 13** depicts a more complex scenario, where packets from beacon **11** are received through multiple gateways and repeaters, simulating a dense infrastructure. Gateways **31** and **32** receive packets from beacon **11** directly. Gateways also receive packets with beacon **11** information transmitted by repeaters **21** and **22.** Packets from repeater **21** are received by gateways **31** and **32,** while packets from repeater **22** are only received by gateway **31.** For each infrastructure element (gateway and repeater), there is one buffer that stores the received RSSI values.

Repeater **21** was operating during a certain period and then went to sleep, so packets from beacon **11** are only received during a small interval (around 10:00:21). Same happens with repeater **22** later (around 10:03:47). Note that RSSI values corresponding to the communication between beacon **11** and repeater **21** are store in the same buffer, regardless of whether they are received through gateway **31** or gateway **32.** In this case, gateway **31** received 3 packets during the repeater **22** operating period, while gateway **32** received only 2 (explained by interference, etc.) In practice, this poses no problem since these are redundant values. When a new packet from beacon **11** is received at 10:05:21 on gateway **32,** only packets received between 10:00:21 and 10:05:21 (5 minutes) are considered. This way, both repeater **21** and repeater **22** operating periods are considered. As described in the previous example, the system estimates the position of the beacon (closest gateway/repeater, trilateration, etc.), considering all mentioned values.

For each beacon in the system, there will be a table similar to the one depicted in **Figure 13****,** containing data from all the infrastructure (gateways and repeaters) that is currently receiving packets from that beacon.

Since beacon packets are received by both gateways and repeaters, the system may operate with or without the usage of repeaters. However, the scenarios depicted above show the advantage of adding repeaters to increase the range/accuracy of the system. As already stated, these repeaters are autonomous, which make their installation simpler and less expensive. For scenarios where there is a combination of real-time (e.g. people tracking) and non-real-time (e.g. asset tracking) applications, the installation of the system may be done in such a way that gateways cover most of the area where real-time is needed, and repeaters cover the area where non-real-time is enough. For this purpose, tags used for real-time tracking will use a shorter time window to evaluate position and may only consider direct communication with the gateways. Tags used for non-real-time tracking (e.g. 5 to 5 minutes) will operate with a larger time window to evaluate position, making the position estimation more accurate by taking into account the communication with all available infrastructure (gateways and repeaters).

Since repeaters are always placed in fixed locations, it is expected that the quality of the communication with the gateways remains constant. Namely, the RSSI between each repeater and gateway should be stable over time. Unexpected changes during short or long periods of time help identify changes in the environment, such as RF interference, or malfunction of specific repeaters and gateways. This way, the usage of repeaters enables better monitoring of the system's health.

The disclosure includes aspects that are advantageous over the prior art, in particular: (1) the repeater operates by alternating between cycles of reception and transmission followed by a sleep period, and (2) the infrastructure comprises constantly operation parts (i.e., the gateways) and parts operating periodically (i.e., the repeaters).

The term "comprising" whenever used in this document is intended to indicate the presence of stated features, integers, steps, components, but not to preclude the presence or addition of one or more other features, integers, steps, components or groups thereof.

Flow diagrams of particular embodiments of the presently disclosed methods are depicted in figures. The flow diagrams illustrate the functional information one of ordinary skill in the art requires to perform said methods required in accordance with the present disclosure.

It will be appreciated by those of ordinary skill in the art that unless otherwise indicated herein, the particular sequence of steps described is illustrative only and can be varied without departing from the disclosure. Thus, unless otherwise stated the steps described are so unordered meaning that, when possible, the steps can be performed in any convenient or desirable order.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The disclosure should not be seen in any way restricted to the embodiments described and a person with ordinary skill in the art will foresee many possibilities to modifications thereof. The embodiments described above are combinable. The scope of protection is defined by the appended claims.

## Claims

1. Monitoring system for determining the location of Bluetooth beacons comprising:
a plurality of battery-powered Bluetooth beacons, each arranged to:
wirelessly transmit periodically Bluetooth beacon messages comprising a beacon identification, beacon ID, of each said transmitting beacon;
a plurality of battery-powered repeaters, each arranged to:
wirelessly receive the beacon messages transmitted by the Bluetooth beacons; measure the received signal strength of each received beacon message; and
wirelessly transmit Bluetooth beacon messages comprising the beacon ID and the received signal strength of the received beacon messages and also comprising a repeater identification, repeater ID, of the transmitting repeater;
one or more line-powered gateways, each arranged to:
wirelessly receive said beacon messages from beacons and repeaters;
measure the received signal strength of each received beacon message; and
transmit one or more gateway messages comprising the beacon ID, the received signal strength, and the repeater ID if applicable, of the received beacon messages, and a gateway identification, gateway ID, of the transmitting gateway;
a server arranged to:
receive said gateway messages; and
determine the location of each of said plurality of beacons from the received gateway messages using a database of predetermined locations for said one or more gateways and of predetermined locations for said plurality of repeaters.

2. Monitoring system according to the previous claim wherein each beacon is arranged to transmit a beacon message and subsequently enter a low-power state for a predetermined sleep period of time until the next transmission of a beacon message.

3. Monitoring system according to any of the previous claims wherein each beacon is arranged to not receive confirmation that the beacon message was received by a gateway and is also arranged to not detect if there was another beacon transmitting at the same time the beacon message was being transmitted.

4. Monitoring system according to any of the previous claims wherein each of the plurality of repeaters is arranged to:
alternate between a receiving state and a transmitting state;
during the receiving state, wirelessly receive the beacon messages transmitted by the Bluetooth beacons and measure the received signal strength of each received beacon message;
during the transmit state, transmit wirelessly Bluetooth beacon messages each comprising the beacon ID and the received signal strength of each beacon from which one or more messages have been received, and also comprising the repeater identification, repeater ID, of the transmitting repeater.

5. Monitoring system according to the previous claim wherein each of the plurality of repeaters is arranged to:
during the transmit state, transmit a predetermined number of wirelessly Bluetooth beacon messages, for each beacon, comprising the beacon ID and the received signal strength of each beacon from which one or more messages have been received, and also comprising the repeater identification, repeater ID, of the transmitting repeater.

6. Monitoring system according to the previous claim wherein each of the plurality of repeaters is arranged to transmit said predetermined number of wirelessly Bluetooth beacon messages, for each beacon from which one or more messages have been received, said predetermined number of wirelessly Bluetooth beacon messages being interpolated between beacon messages corresponding to different Bluetooth beacons.

7. Monitoring system according to any of the previous claims wherein each of the one or more gateways is arranged to:
transmit a summary gateway message comprising the beacon ID, the received signal strength, and the repeater ID if applicable, of all the received beacon messages which have been received for a predetermined periodical duration of time, and also comprising the gateway identification, gateway ID, of the transmitting gateway.

8. Monitoring system according to any of the previous claims wherein the transmitted Bluetooth beacon messages by the Bluetooth beacons and by the repeaters have the same packet structure such that each of the one or more gateways is arranged to receive and transmit said beacon messages from beacons and repeaters, independently of whether the beacon messages originate from beacons or from repeaters.

9. Monitoring system according to any of the previous claims wherein said Bluetooth beacon messages are Bluetooth Low Energy, BLE, Advertisements packets.

10. Monitoring system according to any of the previous claims wherein the server is further arranged to determine the location of a Bluetooth beacon, for the beacon ID of the Bluetooth beacon which location is to be determined, by:
lookup in said database the predetermined location or locations of the gateway ID or gateways IDs comprised in any of received gateway messages with the beacon ID of the Bluetooth beacon which location is to be determined; and
if applicable, lookup in said database the predetermined location or locations of the repeater ID or repeater IDs comprised in any of the received beacon messages with the beacon ID of the Bluetooth beacon which location is to be determined;
report the looked-up locations.

11. Monitoring system according to any of the previous claims wherein the server is further arranged to determine a location route of a Bluetooth beacon by:
determine a route corresponding to each Bluetooth beacon message with the beacon ID of the Bluetooth beacon which location is to be determined, received for a predetermined duration of time, wherein said route comprises the repeater ID of the repeater, if applicable, and the gateway ID through which the Bluetooth beacon message reached said server;
calculate the average received signal strength of the Bluetooth beacon at said gateway or at said repeater if applicable;
report the route and the average received signal strength.

12. Monitoring system according to any of the claims 1-10 wherein the server is further arranged to determine a location route of a Bluetooth beacon by:
determine a route corresponding to each Bluetooth beacon message with the beacon ID of the Bluetooth beacon which location is to be determined, received for a predetermined duration of time, wherein said route comprises the repeater ID of the repeater, if applicable, and the gateway ID through which the Bluetooth beacon message reached said server;
calculate the maximum received signal strength at said gateway or at said repeater if applicable;
report the route and the maximum received signal strength.

13. Monitoring system according to any of the previous claims wherein the server is further arranged to determine the location of a beacon by calculating an intermediate location from two determined locations of said beacon or by trilateration of two or more determined locations of said beacon using the received signal strength for each determined location.

14. Method for implementing a monitoring system for determining the location of Bluetooth beacons, the method comprising the steps of:
wirelessly transmit periodically Bluetooth beacon messages, by a plurality of battery-powered Bluetooth beacons, said Bluetooth beacon messages comprising a beacon identification, beacon ID, of each said transmitting beacon;
wirelessly receive the beacon messages transmitted by the Bluetooth beacons, by a plurality of battery-powered repeaters;
measure the received signal strength of each received beacon message, by the plurality of battery-powered repeaters; and
wirelessly transmit, by the plurality of battery-powered repeaters, Bluetooth beacon messages comprising the beacon ID and the received signal strength of the received beacon messages and also comprising a repeater identification, repeater ID, of the transmitting repeater;
wirelessly receive, by one or more line-powered gateways, said beacon messages from beacons and repeaters;
measure the received signal strength of each received beacon message, by said one or more line-powered gateways; and
transmit one or more gateway messages, by said one or more line-powered gateways, said gateway messages comprising the beacon ID, the received signal strength, and the repeater ID if applicable, of the received beacon messages, and a gateway identification, gateway ID, of the transmitting gateway;
receive said gateway messages by a computer server; and
determine, by said computer server, the location of each of said plurality of beacons from the received gateway messages using a database of predetermined locations for said one or more gateways and of predetermined locations for said plurality of repeaters.

15. Non-transitory storage medium comprising computer program instructions for implementing a monitoring system for determining the location of Bluetooth beacons, the computer program instructions including instructions which, when executed by a processor, cause the processor to carry out the method of the previous claim.

## Patentansprüche

1. Überwachungssystem zur Bestimmung des Standorts von Bluetooth-Baken umfassend:
eine Vielzahl batteriebetriebener Bluetooth-Baken, die jeweils so eingerichtet sind, dass sie:
regelmäßig drahtlose Bluetooth-Baken-Nachrichten mit einer Baken-Kennung, Baken-ID, für jede der genannten übermittelnden Baken übermitteln;
eine Vielzahl batteriebetriebener Repeater, die jeweils so eingerichtet sind, dass sie:
drahtlos die von den Bluetooth-Baken übermittelten Baken-Nachrichten empfangen; die empfangene Signalstärke jeder empfangenen Baken-Nachricht messen; und
drahtlos Bluetooth-Baken-Nachricht mit der Baken-ID und der empfangenen Signalstärke der empfangenen Baken-Nachrichten und ferner eine Repeater-Kennung, Repeater-ID, des übermittelnden Repeaters übermitteln;
ein oder mehrere netzbetriebene Gateways, die jeweils so eingerichtet sind, dass sie:
drahtlos die genannten Nachrichten der Baken und Repeater empfangen;
die empfangene Signalstärke jeder empfangenen Baken-Nachricht messen; und
eine oder mehrere Gateway-Nachrichten mit der Baken-ID, der empfangenen Signalstärke und gegebenenfalls der Repeater-ID der empfangenen Baken-Nachrichten und einer Gateway-Kennung, Gateway-ID, des übermittelnden Gateways übermitteln;
einen Server, der so eingerichtet ist, dass er:
die genannten Gateway-Nachrichten empfängt; und
unter Verwendung einer Datenbank mit vorbestimmten Standorten für das eine oder die mehreren genannten Gateways und vorbestimmten Standorten für die genannte Vielzahl von Repeater den Standort jeder der genannten Vielzahl von Baken aus den empfangenen Gateway-Nachrichten ermittelt.

2. Überwachungssystem nach dem vorangehenden Anspruch, wobei jede Bake so eingerichtet ist, dass sie eine Baken-Nachricht übermittelt und anschließend für einen vorbestimmten Zeitraum in einen Ruhemodus mit geringem Stromverbrauch wechselt, bis die nächste Baken-Nachricht übermittelt wird.

3. Überwachungssystem nach einem der vorangehenden Ansprüche, wobei jede Bake so eingerichtet ist, dass sie keine Bestätigung empfängt, dass die Baken-Nachricht von einem Gateway empfangen wurde, und ferner so eingerichtet ist, dass sie nicht erfasst, ob zur gleichen Zeit, in der die Baken-Nachricht übermittelt wurde, eine andere Bake übermittelt hat.

4. Überwachungssystem nach einem der vorangehenden Ansprüche, wobei jede Vielzahl der Repeater so eingerichtet ist, dass sie:
zwischen einem Empfangszustand und einem Sendezustand abwechselt;
während des Empfangszustands drahtlos die von den Bluetooth-Baken übermittelten Baken-Nachrichten empfängt und die empfangene Signalstärke jeder empfangenen Baken-Nachricht misst;
während des Sendezustands drahtlos Nachrichten der Bluetooth-Baken mit jeweils der Baken-ID und der empfangenen Signalstärke jeder Bake, von der eine oder mehrere Nachrichten empfangen wurde, und die Repeater-Kennung, Repeater-ID, des sendenden Repeaters übermittelt.

5. Überwachungssystem nach dem vorangehenden Anspruch, wobei jeder der Vielzahl der Repeater so eingerichtet ist, dass sie:
während des Sendezustands für jede Bake eine vorbestimmte Anzahl drahtloser Bluetooth-Baken-Nachrichten mit der Baken-ID sowie der empfangenen Signalstärke jeder Bake, von der eine oder mehrere Nachrichten empfangen wurden, und die Repeater-Kennung, Repeater-ID, des sendenden Repeaters übermittelt.

6. Überwachungssystem nach dem vorangehenden Anspruch, wobei jeder der Vielzahl der Repeater so eingerichtet ist, dass sie die genannte vorbestimmte Anzahl drahtloser Bluetooth-Bake-Nachrichten für jede Bake, von der eine oder mehrere Nachrichten empfangen wurden, übermittelt, wobei die genannte vorbestimmte Anzahl der drahtlosen Bluetooth-Baken-Nachrichten zwischen Baken-Nachrichten, die verschiedenen Bluetooth-Baken entsprechen, interpoliert wird.

7. Überwachungssystem nach einem der vorangehenden Ansprüche, wobei jedes der einen oder mehreren Gateways so eingerichtet ist, dass es:
eine zusammenfassende Gateway-Nachricht mit der Baken-ID, der empfangene Signalstärke und gegebenenfalls der Repeater-ID aller empfangenen Baken-Nachrichten übermittelt, die während einem vorbestimmten regelmäßigen Zeitraum empfangen wurden, und die ferner die Gateway-Kennung, Gateway-ID, des sendenden Gateways enthält.

8. Überwachungssystem nach einem der vorangehenden Ansprüche, wobei die von den Bluetooth-Baken und den Repeatern übermittelten Bluetooth-Baken-Nachrichten dieselbe Paketstruktur haben, so dass jedes des einen oder mehreren Gateways so eingerichtet ist, dass es die genannten Baken-Nachrichten der Baken und Repeater empfängt und übermittelt, unabhängig davon, ob die Baken-Nachrichten von Baken oder von Repeatern stammen.

9. Überwachungssystem nach einem der vorangehenden Ansprüche, wobei die genannten Bluetooth-Baken-Nachrichten Bluetooth-Low-Energy, BLE, Advertisement-Pakete sind.

10. Überwachungssystem nach einem der vorangehenden Ansprüchen, wobei der Server ferner so eingerichtet ist, dass er den Standort einer Bluetooth-Bake für die Baken-ID der Bluetooth-Bake, deren Standort bestimmt werden soll, bestimmt, indem er:
in der genannten Datenbank den oder die vorbestimmten Standorte der Gateway-ID oder Gateway-IDs mit der Baken-ID der Bluetooth-Bake, deren Standorte bestimmt werden soll und die in irgendeiner der empfangenen Gateway-Nachrichten enthalten sind, ermittelt; und
gegebenenfalls in der genannten Datenbank den oder die vorbestimmten Standorte der Repeater-ID oder Repeater-IDs mit der Baken-ID der Bluetooth-Bake, deren Standort bestimmt werden soll und die in irgendeiner der empfangenen Baken-Nachrichten enthalten sind, ermittelt;
die ermittelten Standorte meldet.

11. Überwachungssystem nach einem der vorangehenden Ansprüche, wobei der Server ferner so eingerichtet ist, dass er einen Standortverlauf einer Bluetooth-Bake dadurch bestimmt, dass er:
eine Route bestimmt, die jeder Nachricht mit der Baken-ID der Bluetooth-Bake, deren Standort bestimmt werden soll und die für eine vorbestimmte Dauer empfangen wurde, bestimmt, wobei die genannte Route gegebenenfalls die Repeater-ID des Repeaters und die Gateway-ID umfasst, über die die Bluetooth-Baken-Nachricht den genannten Server erreicht hat;
die durchschnittliche Empfangssignalstärke der Bluetooth-Bake an dem genannten Gateway oder gegebenenfalls am Repeater berechnet;
die Route und die durchschnittlich empfangene Signalstärke meldet.

12. Überwachungssystem nach einem der Ansprüche 1-10, wobei der Server ferner so eingerichtet ist, dass er einen Standortortverlauf einer Bluetooth-Bake bestimmt, indem er:
eine Route bestimmt, die jeder Nachricht mit der Baken-ID der Bluetooth-Bake, deren Standort bestimmt werden soll und die für eine vorbestimmte Dauer empfangen wurde, bestimmt, wobei die genannte Route gegebenenfalls die Repeater-ID des Repeaters und die Gateway-ID umfasst, über die die Nachricht der Bluetooth-Bake den genannten Server erreicht hat;
die maximale Empfangssignalstärke an dem genannten Gateway oder gegebenenfalls an dem Repeater berechnet;
die Route und die maximale empfangene Signalstärke meldet.

13. Überwachungssystem nach einem der vorangehenden Ansprüche, wobei der Server ferner so eingerichtet ist, dass er den Standort einer Bake bestimmt, indem er einen Zwischenstandort aus zwei bestimmten Standorten der genannten Bake oder durch Trilateration von zwei oder mehr bestimmten Standorten der genannten Bake unter Verwendung der empfangenen Signalstärke für jeden bestimmten Standort berechnet.

14. Verfahren zur Implementierung eines Überwachungssystems zur Bestimmung des Standorts von Bluetooth-Baken, wobei das Verfahren folgende Schritte umfasst:
regelmäßig durch eine Vielzahl batteriebetriebener Bluetooth-Baken übermittelte drahtlose Nachrichten, wobei die genannten Bluetooth-Baken-Nachrichten eine Baken-Kennung, Baken-ID, für jede der genannten übermittelnden Baken umfassen;
drahtloser Empfang der von den Bluetooth-Baken übermittelten Baken-Nachrichten durch eine Vielzahl batteriebetriebener Repeater;
Messen der Empfangssignalstärke jeder empfangenen Baken-Nachricht durch die Vielzahl der batteriebetriebenen Repeater; und
drahtlose Übertragung von Bluetooth-Baken-Nachrichten mit dem Baken-ID und der empfangenen Signalstärke der empfangenen Baken-Nachrichten sowie der Repeater-Kennung, Repeater-ID, durch die Vielzahl der batteriebetriebenen Repeater;
drahtloser Empfang der genannten Baken-Nachrichten von Baken und Repeatern durch ein oder mehrere netzbetriebene Gateways;
Messen der Empfangssignalstärke jeder empfangenen Baken-Nachricht durch ein oder mehrere netzbetriebene Gateways; und
Senden einer oder mehrerer Gateway-Nachrichten durch das genannte eine oder die mehreren leitungsgespeisten Gateways, wobei die genannten Gateway-Nachrichten die Baken-ID, die empfangene Signalstärke und gegebenenfalls die Repeater-ID der empfangenen Baken-Nachrichten sowie eine Gateway-Kennung, Gateway-ID, des sendenden Gateways umfassen;
Empfangen der genannten Gateway-Nachrichten durch einen Computer-Server; und
Ermitteln des Standortes durch den genannten Computer-Server unter Verwendung einer Datenbank mit vorbestimmten Standorten für das eine oder die mehreren genannten Gateways und vorbestimmten Standorten für die genannte Vielzahl der Repeater.

15. Nichtflüchtiges Speichermedium, einschließlich Programmanweisungen zur Implementierung eines Überwachungssystems zur Bestimmung des Standorts von Bluetooth-Baken, wobei die Programmanweisungen für den Computer Anweisungen enthalten, die, wenn sie von einem Prozessor ausgeführt werden, den Prozessor veranlassen, das Verfahren nach den vorangehenden Ansprüchen auszuführen.

## Revendications

1. Système de surveillance pour déterminer l'emplacement de balises Bluetooth comprenant :
une pluralité de balises Bluetooth alimentées par batterie, chacune étant arrangée pour :
transmettre périodiquement sans fil des messages de balise Bluetooth comprenant une identification de balise, ID de balise, de chacune desdites balises transmettrices;
une pluralité de répéteurs alimentés par batterie, chacun étant arrangé pour :
recevoir sans fil les messages de balise transmis par les balises Bluetooth ;
mesurer la force du signal reçu de chaque message de balise reçu ; et
transmettre sans fil des messages de balise Bluetooth comprenant l'ID de balise et la force du signal reçu des messages de balise reçus et comprenant également une identification de répéteur, ID de répéteur, du répéteur transmetteur ;
une ou plusieurs passerelles alimentées par ligne sous tension, chacune étant arrangée pour:
recevoir sans fil lesdits messages de balise des balises et répéteurs ;
mesurer la force du signal reçu de chaque message de balise reçu ; et
transmettre un ou plusieurs messages de passerelle comprenant l'ID de balise, la force du signal reçu, et l'ID de répéteur si applicable, des messages de balise reçus, et une identification de passerelle, ID de passerelle, de la passerelle transmettrice ;
un serveur étant arrangé pour :
recevoir lesdits messages de passerelle ; et
déterminer l'emplacement de chacune desdites pluralités de balises à partir des messages de passerelle reçus utilisant une base de données d'emplacements prédéterminés pour ladite ou lesdites passerelles(s) et d'emplacements prédéterminés pour ladite pluralité de répéteurs.

2. Système de surveillance selon la revendication précédente dans lequel chaque balise est arrangée pour transmettre un message de balise et par la suite entrer dans un mode d'économie d'énergie pour une période de temps de veille prédéterminée jusqu'à la transmission suivante d'un message balise.

3. Système de surveillance selon l'une quelconque des revendications précédentes dans lequel chaque balise est arrangée pour ne pas recevoir de confirmation que le message balise a été reçu par une passerelle et est également arrangée pour ne pas détecter s'il y avait une autre balise transmettant en même temps le message de balise qui était en cours de transmission.

4. Système de surveillance selon l'une quelconque des revendications précédentes dans lequel chacun de la pluralité de répéteurs est arrangé pour :
alterner entre un mode de réception et un mode de transmission ;
durant le mode de réception, recevoir sans fil les messages de balise transmis par les balises Bluetooth et mesurer la force du signal reçu de chaque message de balise reçu ;
durant le mode de transmission, transmettre sans fil des messages de balise Bluetooth chacun comprenant l'ID de balise et la force du signal reçu de chaque balise à partir de laquelle un ou plusieurs messages ont été reçus, et comprenant également l'identification de répéteur, ID de répéteur, du répéteur transmetteur.

5. Système de surveillance selon la revendication précédente dans lequel chacun de la pluralité de répéteurs est arrangé pour :
durant le mode de transmission, transmettre un nombre prédéterminé de messages de balise Bluetooth sans fil, pour chaque balise, comprenant l'ID de balise et la force du signal reçu de chaque balise à partir de laquelle un ou plusieurs messages ont été reçus, et comprenant également l'identification de répéteur, ID de répéteur, du répéteur transmetteur.

6. Système de surveillance selon la revendication précédente dans lequel chacun de la pluralité de répéteurs est arrangé pour transmettre ledit nombre prédéterminé de messages de balise Bluetooth sans fil, pour chaque balise à partir de laquelle un ou plusieurs messages ont été reçus, ledit nombre prédéterminé de messages de balise Bluetooth sans fil étant interpolé entre des messages de balise correspondant à différentes balises Bluetooth.

7. Système de surveillance selon l'une quelconque des revendications précédentes dans lequel chacune de la ou des passerelles est arrangée pour :
transmettre un message de passerelle résumé comprenant l'ID de balise, la force du signal reçu, et l'ID de répéteur si applicable, de tous les messages de balise reçus qui ont été reçus pour une durée de temps périodique prédéterminée, et comprenant également l'identification de passerelle, ID de passerelle, de la passerelle transmettrice.

8. Système de surveillance selon l'une quelconque des revendications précédentes dans lequel les messages de balise Bluetooth transmis par les balises Bluetooth et par les répéteurs ont la même structure de paquet tel que chacune de la ou des passerelles soit arrangée pour recevoir et transmettre lesdits messages de balise des balises et répéteurs, indépendamment du fait que les messages de balise proviennent de balises ou de répéteurs.

9. Système de surveillance selon l'une quelconque des revendications précédentes dans lequel lesdits messages de balise Bluetooth sont des paquets de publicité Bluetooth Low Energy, BLE.

10. Système de surveillance selon l'une quelconque des revendications précédentes dans lequel le serveur est également arrangé pour déterminer l'emplacement d'une balise Bluetooth, pour l'ID balise de la balise Bluetooth dont l'emplacement doit être déterminé, en :
recherchant dans ladite base de données l'emplacement ou les emplacements prédéterminés de l'ID de passerelle ou des IDs de passerelle compris dans l'un quelconque des messages de passerelle reçus avec l'ID de balise de la balise Bluetooth dont l'emplacement doit être déterminé ; et
si applicable, recherchant dans ladite base de données l'emplacement ou les emplacements prédéterminés de l'ID de répéteur ou des IDs de répéteur compris dans l'un quelconque des messages de balise reçus avec l'ID de balise de la balise Bluetooth dont l'emplacement doit être déterminé ;
rapportant les emplacements recherchés.

11. Système de surveillance selon l'une quelconque des revendications précédentes dans lequel le serveur est également arrangé pour déterminer un itinéraire d'emplacement d'une balise Bluetooth en :
déterminant un itinéraire correspondant à chacun des messages de balise Bluetooth avec l'ID de balise de la balise de Bluetooth dont l'emplacement reste à déterminer, reçu pour une durée de temps prédéterminée, dans lequel ledit itinéraire comprend l'ID de répéteur du répéteur, si applicable, et l'ID de passerelle à travers laquelle le message de la balise Bluetooth a atteint ledit serveur ;
calculant la force du signal reçu moyenne de la balise Bluetooth à ladite passerelle ou audit répéteur si applicable ;
rapportant l'itinéraire et la force du signal reçu moyenne.

12. Système de surveillance selon l'une quelconque des revendications 1-10 dans lequel le serveur est également arrangé pour déterminer un itinéraire d'emplacement d'une balise Bluetooth en :
déterminant un itinéraire correspondant à chaque message de balise Bluetooth avec l'ID de balise de la balise Bluetooth dont l'emplacement reste à déterminer, reçu pour une durée de temps prédéterminée, dans lequel ledit itinéraire comprend l'ID de répéteur du répéteur, si applicable, et l'ID de passerelle à travers laquelle le message de la balise Bluetooth a atteint ledit serveur ;
calculant la force du signal reçu maximale à ladite passerelle ou audit répéteur si applicable ;
rapportant l'itinéraire et la force du signal reçu maximale.

13. Système de surveillance selon l'une quelconque des revendications précédentes dans lequel le serveur est également arrangé pour déterminer l'emplacement d'une balise en calculant un emplacement intermédiaire à partir de deux emplacements déterminés de ladite balise ou par trilatération de deux ou plus d'emplacements déterminés de ladite balise utilisant la force du signal reçu pour chacun des emplacements déterminés.

14. Procédé destiné à la mise en place d'un système de surveillance pour déterminer l'emplacement de balises Bluetooth, le procédé comprenant les étapes consistant à :
transmettre périodiquement sans fil des messages de balise Bluetooth, à travers une pluralité de balises Bluetooth alimentées par batterie, lesdits messages de balise Bluetooth comprenant une identification de balise, ID de balise, de chacune desdites balises transmettrices ;
recevoir sans fil les messages de balise transmis par les balises Bluetooth, à travers une pluralité de répéteurs alimentés par batterie ;
mesurer la force du signal reçu de chaque message de balise reçu, à travers la pluralité de répéteurs alimentés par batterie ; et
transmettre sans fil, à travers la pluralité de répéteurs alimentés par batterie, des messages de balise Bluetooth comprenant l'ID de balise et la force du signal reçu des messages de balise reçus et comprenant également une identification de répéteur, ID de répéteur, du répéteur transmetteur ;
recevoir sans fil, à travers une ou plusieurs passerelles alimentées par ligne sous tension, lesdits messages de balise issus de balises et répéteurs ;
mesurer la force du signal reçu de chaque message de balise reçu, à travers ladite ou
lesdites passerelles alimentées par ligne sous tension ; et
transmettre un ou plusieurs messages de passerelle, à travers ladite ou lesdites passerelles alimentées par ligne sous tension, lesdits messages de passerelle comprenant l'ID de balise, la force du signal reçu, et l'ID de répéteur si applicable, des messages de balise reçus, et une identification de passerelle, ID de passerelle, de la passerelle transmettrice ;
recevoir lesdits messages de passerelle à travers un serveur informatique ; et
déterminer, à travers ledit serveur informatique, l'emplacement de chacune desdites pluralités de balises à partir des messages de passerelle reçus en utilisant une base de données d'emplacements prédéterminés pour ladite ou lesdites passerelle(s) et d'emplacements prédéterminés pour ladite pluralité de répéteurs.

15. Moyen de stockage non transitoire comprenant des instructions de logiciel informatique pour la mise en place d'un système de surveillance pour déterminer l'emplacement de balises Bluetooth, les instructions de logiciel informatique incluant des instructions qui, lorsqu'elles sont exécutées par un processeur, font en sorte que le processeur exécute le procédé de la revendication précédente.
